# EUROPEAN PATENT APPLICATION

(11) **EP 4 783 468 A1**
(43) Date of publication of application: **29.07.2026**
(21) Application number: 24923338.8
(22) Date of filing: 26.09.2024
(51) Int. Cl.: H04B 1/04

(54) **COMMUNICATION DEVICE AND COMMUNICATION METHOD**

(30) Priority: 07.02.2024 CN 202410175987
(71) Applicant: HUAWEI TECHNOLOGIES CO., LTD., Shenzhen 518129 (CN)
(72) Inventor: MAO, Chunyan, Shenzhen, Guangdong 518129 (CN); GAO, Liuchuang, Shenzhen, Guangdong 518129 (CN); WU, Yanming, Shenzhen, Guangdong 518129 (CN); ZHAO, Yifan, Shenzhen, Guangdong 518129 (CN); YU, Dong, Shenzhen, Guangdong 518129 (CN)
(74) Representative: Pfenning, Meinig & Partner mbB
(86) International application number: PCT/CN2024/121521
(87) International publication number: WO 2025/167133

(57) **Abstract**

Embodiments of this application provide a communication device and a communication method, applied to the field of wireless communication technologies. The communication device includes a control circuit, a radio frequency integrated circuit, and an antenna structure. The radio frequency integrated circuit is configured to: transmit and/or receive a radio frequency signal based on the antenna structure. The control circuit is configured to: switch a hardware operating parameter of the antenna structure from a current first parameter value to a second parameter value; and output a first parameter control signal based on device status information of the communication device at the first parameter value and the second parameter value, where the first parameter control signal is used to update and set the hardware operating parameter of the antenna structure to a first target parameter value. The hardware operating parameter includes an impedance magnitude of the antenna structure and/or an aperture value of the antenna structure, and the device status information includes at least a signal reflection coefficient of the antenna structure. In embodiments of this application, high-precision optimization of communication performance of the antenna structure is implemented.

## Description

This application claims priority to Chinese Patent Application No. 202410175987.4, filed with the China National Intellectual Property Administration on February 7, 2024 and entitled "COMMUNICATION DEVICE AND COMMUNICATION METHOD", which is incorporated herein by reference in its entirety.

### TECHNICAL FIELD

This application relates to the field of wireless communication technologies, and in particular, to a communication device and a communication method.

### BACKGROUND

An antenna structure is disposed in a communication device. The communication device receives and/or transmits a radio frequency signal based on the antenna structure, to implement wireless communication. For some communication devices whose antenna structures are partially or completely disposed outside the devices, a change of an external environment and/or a change of a device status of the communication device affect/affects performance of the antenna structure. A hardware operating parameter (including an impedance magnitude of the antenna structure and/or an aperture value of the antenna structure) of the antenna structure may be adjusted, to avoid impact of a performance change of the antenna structure on wireless communication quality, thereby maintaining better communication performance while adapting to the change of the external environment and the change of the device status of the communication device.

An existing adjustment method is performing prediction and calculation on a target parameter value based on device status information of the antenna structure in a preset status scenario. The calculated target parameter value is updated and set to the hardware operating parameter of the antenna structure, to adapt to the change of the external environment and/or the change of the device status of the communication device. However, in this implementation method, the device status information obtained in the preset status scenario cannot accurately represent a hardware characteristic of the antenna structure in an actual external environment and in an actual communication device status, resulting in limited communication performance improvement after adjustment. Therefore, a more accurate performance improvement method for the antenna structure needs to be proposed.

### SUMMARY

Embodiments of this application provide a communication device and a communication method, to improve communication performance after adjusting a hardware operating parameter of an antenna structure.

To achieve the foregoing objectives, the following technical solutions are used in embodiments of this application.

According to a first aspect, a communication device is provided. The communication device includes a control circuit, a radio frequency integrated circuit, and an antenna structure. The radio frequency integrated circuit is configured to: transmit and/or receive a radio frequency signal based on the antenna structure. The control circuit is configured to: switch a hardware operating parameter of the antenna structure from a current first parameter value to a second parameter value; and output a first parameter control signal based on device status information of the communication device at the first parameter value and device status information of the communication device at the second parameter value, where the first parameter control signal is used to set the hardware operating parameter of the antenna structure to a first target parameter value. The hardware operating parameter includes an impedance magnitude of the antenna structure and/or an aperture value of the antenna structure, and the device status information includes at least a signal reflection coefficient of the antenna structure.

**In** embodiments of this application, when the antenna structure is of an antenna type that is partially or completely external to the communication device, communication performance of the antenna structure is easily affected by many factors. To optimize communication performance of the antenna structure in real time, a better first target parameter value that can be matched during current running of the antenna structure may be calculated based on a prediction and calculation operation, and a hardware operating parameter (for example, a transmission impedance and/or an aperture value) of the antenna structure is adjusted based on the first target parameter value, to optimize communication performance of the antenna structure. In each prediction and calculation operation, device status information corresponding to the communication device when the antenna structure operates at a current hardware operating parameter (that is, the first parameter value) needs to be obtained, and the first target parameter value is obtained through prediction and calculation based on the device status information according to a specific algorithm. Communication performance may be affected by many factors, and a circuit characteristic of a hardware circuit for radio frequency processing varies with an application scenario in which the communication device is located. Therefore, if only the device status information at the first parameter value is collected, the device status information cannot accurately represent an influencing factor on communication performance during a change in different application scenarios and a change in a hardware characteristic. Therefore, communication performance cannot be greatly improved by relying only on the device status information at the first parameter value, and even negative optimization may occur. To improve an optimization degree of communication performance of the antenna structure as much as possible, and avoid negative optimization caused by inaccurate prediction, in embodiments of this application, before each prediction and calculation operation, the hardware operating parameter of the antenna structure is switched from the current first parameter value to the second parameter value, and an operation is performed based on the device status information at the first parameter value and the second parameter value, to obtain a more accurate first target parameter value. In this way, communication performance of the antenna structure is optimized to a greater extent.

In a possible implementation, the control circuit is further configured to: switch the hardware operating parameter of the antenna structure from the current first target parameter value to the second parameter value, and output a second parameter control signal based on device status information of the communication device at the first target parameter value and the device status information of the communication device at the second parameter value, where the second parameter control signal is used to set the hardware operating parameter of the antenna structure to a second target parameter value. In embodiments of this application, after completing one prediction and calculation operation, the control circuit obtains the related first target parameter value. The first target parameter value is configured as a hardware operating parameter for subsequent operating of the antenna structure. In this case, in a subsequent operating process of the antenna structure, a new prediction and calculation operation may be further performed. In the new prediction and calculation operation, the device status information at the first target parameter value may be collected, and then the hardware operating parameter of the antenna structure is switched from the first target parameter value to the second parameter value. After the device status information at the second parameter value of the current prediction and calculation operation is collected, a new round of prediction and calculation may be performed on the target parameter value based on the first target parameter value and the device status information at the second parameter value, to obtain the second target parameter value. The second target parameter value is set to the hardware operating parameter of the antenna structure, to optimize the communication performance of the antenna structure in real time again.

In a possible implementation, after outputting the first parameter control signal, the control circuit is further configured to: switch the first target parameter value to the second parameter value in response to a first reflection coefficient being greater than a second reflection coefficient. The first reflection coefficient is a signal reflection coefficient corresponding to the antenna structure operating at the first target parameter value, and the second reflection coefficient is a signal reflection coefficient corresponding to the antenna structure operating at the second parameter value. In embodiments of this application, after the first target parameter value is obtained in one prediction and calculation operation, there is an extremely low probability that communication performance corresponding to the first target parameter value is inferior to communication performance of the second parameter value in the current prediction and calculation operation. To optimize the extreme case of negative optimization of the communication performance, the communication performance at the first target parameter value may be determined based on a ratio of the first reflection coefficient to the second reflection coefficient. If the communication performance at the first target parameter value is poor, the hardware operating parameter of the antenna structure may be switched from the first target parameter value to the second parameter value for remedy.

In a possible implementation, the communication device further includes a sensor group, and the sensor group includes at least one device status sensor. The device status information further includes at least one of the following information collected by the at least one device status sensor: information about a relative location between the communication device and a user, motion information of the communication device, and posture information of the communication device in free space. In embodiments of this application, a change of communication performance of the antenna structure is usually related to a use status of the communication device. In a use process of the communication device, each device status sensor in the communication device may represent different use statuses of the communication device. To improve accuracy of the prediction and calculation operation, some sensing information collected by the sensor group may be obtained to assist in algorithm processing, thereby improving accuracy of the prediction and calculation operation.

In a possible implementation, the device status information further includes at least one of the following information: frequency information of the radio frequency signal and signal quality information of the radio frequency signal. In embodiments of this application, a frequency change of the radio frequency signal and communication signal quality of the radio frequency signal are also related to a change of communication performance of the antenna structure. In a prediction and calculation operation, as feature dimensions of a data feature in an input algorithm are enriched, prediction and calculation accuracy can also be improved to some extent.

In a possible implementation, the second parameter value has a plurality of preset fixed values, and the plurality of fixed values one-to-one correspond to a plurality of frequency ranges of the radio frequency signal. In embodiments of this application, the antenna structure presents different hardware operating characteristics in different frequency ranges. Therefore, corresponding second parameter values with fixed values may be pre-designed for radio frequency signals in different frequency ranges. A principle of setting the value of the second parameter value is that the antenna structure has good communication performance when receiving/transmitting a radio frequency signal in a corresponding frequency range. In view of this, when receiving/transmitting a radio frequency signal in a frequency range for communication, related device status information is obtained based on the current first parameter value. Then, the hardware operating parameter is switched from the current first parameter value to the second parameter value. At the second parameter value, the antenna structure can still ensure good communication performance, so that a switching action does not cause obvious impact on communication. In addition, the second parameter value is a fixed value in a corresponding frequency range. When the antenna structure receives/transmits a radio frequency signal in a fixed frequency range, current real-time hardware operating parameters may be different (that is, values of the first parameter value are different), but a value of the second parameter value is known. Therefore, when the control circuit performs algorithm prediction, both the device status information obtained based on the first parameter value and the device status information obtained based on the second parameter value may represent a change characteristic of a current influencing factor, and represent an impact change characteristic of a hardware characteristic of a hardware circuit of the radio frequency signal. Then, the second parameter value is used as a fixed parameter value. With the fixed parameter value, there is also a difference between device status information actually obtained in each prediction and calculation operation and device status information actually obtained based on the second parameter value in another prediction and calculation operation, and the difference may represent different influencing factors and different hardware characteristics between different prediction and calculation operations. Finally, in most cases, current hardware operating parameters (that is, first parameter values) corresponding to different prediction and calculation operations are different. A conventional algorithm model cannot well identify, based on the device status information at the first parameter value, a difference between influencing factors and hardware characteristics between different prediction and calculation operations. The device status information at the second parameter value with the fixed value may be used as a reference for algorithm processing. Accuracy of a prediction result of a neural network algorithm depends to a large extent on accuracy of describing target feature information by input data. Based on the foregoing implementation, in embodiments of this application, dimensions of data input by the algorithm model of the control circuit can be enriched, and the input data can better reflect a difference between environmental factors of the communication device and a difference between hardware characteristics of hardware processing circuits of radio frequency signals. In this way, accuracy of predicting the first target parameter value is improved. The hardware operating parameter of the antenna structure is adjusted based on the more accurate first target parameter value, so that communication performance of the antenna structure can be improved more greatly, and a probability of a negative gain (that is, communication performance is lower at the first target parameter value) can be reduced as much as possible.

In a possible implementation, operating time of the antenna structure at the first parameter value is greater than or equal to operating time of the antenna structure at the second parameter value. In embodiments of this application, the first parameter value in each prediction and calculation operation is a hardware operating parameter optimized and adjusted in a previous prediction and calculation operation. Therefore, communication performance at the first parameter value is usually better than communication performance at the second parameter value. To maximize a gain of communication performance as much as possible, the operating time of the antenna structure at the first parameter value may be set to be greater than or equal to the operating time of the antenna structure at the second parameter value.

In a possible implementation, the antenna structure includes an impedance matching circuit, and the impedance matching circuit includes a plurality of impedance tuning branches; and/or the antenna structure includes an aperture tuning circuit, and the aperture tuning circuit includes a plurality of aperture tuning branches. The first parameter control signal includes a plurality of code bits, and the plurality of code bits one-to-one correspond to the plurality of impedance tuning branches and/or the plurality of aperture tuning branches. A value of each code bit of the first parameter control signal is used to adjust an operating status of the impedance matching circuit and/or an operating status of the aperture tuning circuit. In embodiments of this application, a parameter control signal is directly output in each prediction and calculation operation, and a plurality of code bits of the parameter control signal respectively correspond to operating status of to-be-adjusted tuning branches (such as an impedance tuning branch and/or an aperture tuning branch). A value of a corresponding hardware operating parameter (for example, an impedance magnitude and an aperture value) is adjusted by adjusting an operating status. In this case, each time after the algorithm is executed to perform parameter prediction, a prediction result may be directly used to adjust a hardware operating parameter, there is no need to pre-design a use case database, a parameter mapping table, or the like, and there is no need to perform an operation such as table lookup based on the prediction result. Based on this solution, a processing procedure of a parameter adjustment operation can be simplified, and real-time performance of optimization processing can be improved.

In a possible implementation, the communication device further includes a modem. The modem is connected to the radio frequency integrated circuit. The control circuit is disposed in the radio frequency integrated circuit, or disposed in the modem. In embodiments of this application, the target parameter value of each time of prediction and calculation is used to perform parameter adjustment on the impedance matching circuit and/or the aperture tuning circuit. Therefore, the control circuit may be disposed in a processing circuit related to wireless communication, for example, a modem located in a baseband, or a radio frequency integrated circuit.

In a possible implementation, the control circuit is an artificial intelligence operation circuit. In embodiments of this application, based on different application scenario requirements, an artificial intelligence operation circuit may be additionally disposed to implement prediction and calculation processing. The artificial intelligence operation circuit may be an existing operation circuit (for example, an NPU in a system-on-a-chip of a mobile phone) in a communication device, or may be a specially designed dedicated computing circuit.

According to a second aspect, an embodiment of this application further provides a communication method. The communication method is applied to a communication device, and the communication device includes a radio frequency integrated circuit and an antenna structure. The radio frequency integrated circuit is configured to: transmit and/or receive a radio frequency signal based on the antenna structure. The method includes: switching a hardware operating parameter of the antenna structure from a current first parameter value to a second parameter value; and outputting a first parameter control signal based on device status information of the communication device at the first parameter value and device status information of the communication device at the second parameter value, where the first parameter control signal is used to set the hardware operating parameter of the antenna structure to a first target parameter value. The hardware operating parameter includes an impedance magnitude of the antenna structure and/or an aperture value of the antenna structure.

In a possible implementation, the method further includes: switching the hardware operating parameter of the antenna structure from the current first target parameter value to the second parameter value; and outputting a second parameter control signal based on device status information of the communication device at the first target parameter value and the device status information of the communication device at the second parameter value, where the second parameter control signal is used to update and set the hardware operating parameter of the antenna structure to a second target parameter value.

In some examples, outputting the first parameter control signal based on the device status information of the communication device at the first parameter value and the device status information of the communication device at the second parameter value includes: Before switching the hardware operating parameter of the antenna structure from the current first parameter value to the second parameter value, obtaining first device status information of the communication device at the first parameter value; after switching the hardware operating parameter of the antenna structure from the current first parameter value to the second parameter value, obtaining second device status information of the communication device at the second parameter value; and outputting the first parameter control signal based on the first device status information and the second device status information.

In a possible implementation, after outputting the first parameter control signal, the method further includes: switching the first target parameter value to the second parameter value in response to a first reflection coefficient being greater than a second reflection coefficient. The first reflection coefficient is a signal reflection coefficient corresponding to the antenna structure operating at the first target parameter value, and the second reflection coefficient is a signal reflection coefficient corresponding to the antenna structure operating at the second parameter value.

In a possible implementation, the communication device further includes a sensor group, and the sensor group includes at least one device status sensor. The device status information includes at least one of the following information collected by the at least one device status sensor: information about a relative location between the communication device and a user, motion information of the communication device, and posture information of the communication device in free space.

In a possible implementation, the device status information further includes at least one of the following information: frequency information of the radio frequency signal and signal quality information of the radio frequency signal.

In a possible implementation, the second parameter value has a plurality of preset fixed values, and the plurality of fixed values one-to-one correspond to a plurality of frequency ranges of the radio frequency signal.

In a possible implementation, operating time of the antenna structure at the first parameter value is greater than or equal to operating time of the antenna structure at the second parameter value.

In a possible implementation, the antenna structure includes an impedance matching circuit, and the impedance matching circuit includes a plurality of impedance tuning branches; and/or the antenna structure includes an aperture tuning circuit, and the aperture tuning circuit includes a plurality of aperture tuning branches. The first parameter control signal includes a plurality of code bits, and the plurality of code bits one-to-one correspond to the plurality of impedance tuning branches and/or the plurality of aperture tuning branches. A value of each code bit of the first parameter control signal is used to adjust an operating status of the impedance matching circuit and/or an operating status of the aperture tuning circuit.

According to a third aspect, an embodiment of this application further provides a computer-readable storage medium. The computer-readable storage medium includes instructions. When the instructions are run on a processor, the processor is enabled to perform the communication method described in the second aspect.

For technical principles and beneficial effect of the second aspect and the third aspect, refer to related descriptions of the first aspect. Details are not described herein again.

### BRIEF DESCRIPTION OF DRAWINGS

FIG. 1 is a diagram 1 of a structure of a communication device according to an embodiment of this application;
FIG. 2 is a diagram of scenarios of different use statuses of a communication device according to an embodiment of this application;
FIG. 3 is a diagram 2 of a structure of a communication device according to an embodiment of this application;
FIG. 4 is a diagram 3 of a structure of a communication device according to an embodiment of this application;
FIG. 5 is a diagram 4 of a structure of a communication device according to an embodiment of this application;
FIG. 6 is a diagram of a structure of an antenna structure according to an embodiment of this application;
FIG. 7 is a schematic flowchart 1 of a second communication method according to an embodiment of this application;
FIG. 8 is a schematic flowchart 2 of a second communication method according to an embodiment of this application;
FIG. 9 is a diagram of an input/output of a second neural network algorithm according to an embodiment of this application;
FIG. 10 is a diagram of triggering a prediction and calculation operation by a change of a use status of a mobile phone according to an embodiment of this application;
FIG. 11 is a schematic flowchart 3 of a second communication method according to an embodiment of this application;
FIG. 12 is a schematic flowchart of performing one prediction and calculation operation by a control circuit according to an embodiment of this application; and
FIG. 13 is a schematic flowchart 4 of a second communication method according to an embodiment of this application.

### DESCRIPTION OF EMBODIMENTS

It should be noted that in embodiments of this application, terms such as "first" and "second" are merely used to distinguish between features of a same type, and cannot be understood as an indication of relative importance, a quantity, a sequence, or the like.

In embodiments of this application, the "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term like "example" or "for example" is intended to present a related concept in a specific manner.

The terms "coupling" and "connection" in embodiments of this application should be understood in a broad sense. For example, the term may refer to a physical direct connection, or may refer to an indirect connection implemented through an electronic component, for example, a connection implemented through a resistor, an inductor, a capacitor, or another electronic component.

First, some basic concepts in embodiments of this application are explained and described.

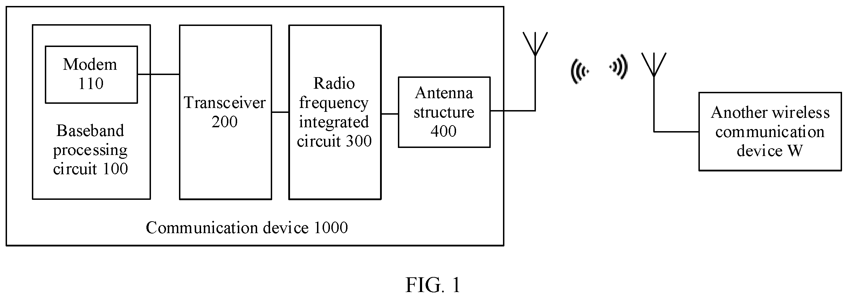

Wireless communication may be implemented between communication devices based on interaction of a radio frequency signal. FIG. 1 is a diagram of an architecture of a communication device. A communication device 1000 includes a baseband processing circuit 100, a transceiver 200, a radio frequency integrated circuit (radio frequency integrated circuit, RFIC) 300, and an antenna structure 400. The baseband processing circuit 100 includes a modem (modem) 110. The modem 110 of the baseband processing circuit 100 is connected to the transceiver 200, the transceiver 200 is connected to the radio frequency integrated circuit 300, and the radio frequency integrated circuit 300 is connected to the antenna structure 400. The baseband processing circuit 100 is configured to output, to the transceiver 200 via the modem 110, a first modulation signal that carries service information that needs to be sent to another wireless communication device W. The transceiver 200 is configured to perform frequency conversion processing on the first modulation signal to obtain a first radio frequency signal that carries the service information that needs to be sent, and output the first radio frequency signal to the radio frequency integrated circuit 300. After performing radio frequency signal processing on the first radio frequency signal, the radio frequency integrated circuit 300 transmits a processed first radio frequency signal to the another wireless communication device W via the antenna structure 400. In addition, the antenna structure 400 may further receive a second radio frequency signal transmitted by the another wireless communication device W. The second radio frequency signal carries service information that the communication device 1000 needs to receive from the another wireless communication device W. After performing radio frequency signal processing on the second radio frequency signal, the radio frequency integrated circuit 300 outputs a processed second radio frequency signal to the transceiver 200. The transceiver 200 performs signal processing on the second radio frequency signal to obtain a second modulation signal that carries the service information that needs to be received. The modem 110 of the baseband processing circuit 100 demodulates the second modulation signal, to obtain, through parsing, the service information that needs to be received. Wireless communication between the communication device 1000 and the another wireless communication device W can be implemented in the foregoing manner.

In some examples, when the antenna structure 400 is partially or completely disposed outside the communication device 1000, a change of an external environment and/or a change of a device status of the device affect/affects performance of the antenna structure. For example, the antenna structure 400 is an external antenna of the communication device 1000. For another example, the communication device 1000 is a portable terminal device (for example, a mobile phone, a tablet, or a watch), and the antenna structure 400 may be disposed at a location like a middle frame of a device of the communication device 1000.

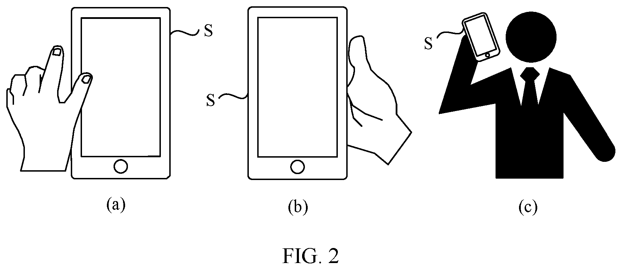

(a), (b), and (c) in FIG. 2 are example diagrams of different application scenarios in which a mobile phone is used as the communication device 1000 shown in FIG. 1. When the communication device 1000 is a mobile phone 1000A, the antenna structure 400 is manufactured on a middle frame of a mobile phone S. In this case, different use statuses of the mobile phone S affect communication performance of the antenna structure 400. For example, when a user uses the mobile phone S in different postures (for example, answering a call, browsing a web page, playing a game, and placing the mobile phone on a leg), the user configures different mobile phone shells for the mobile phone S, and the mobile phone S is placed on different metal surfaces, different blocking effect is caused to the antenna structure 400, and an impedance parameter of a transmission path of a radio frequency signal is changed. In addition, a relative location (for example, a location relative to the ground) of the mobile phone S in free space, a relative acceleration of the mobile phone S in free space, a temperature of an environment in which the mobile phone S is located, and the like all affect communication performance of the antenna structure 400.

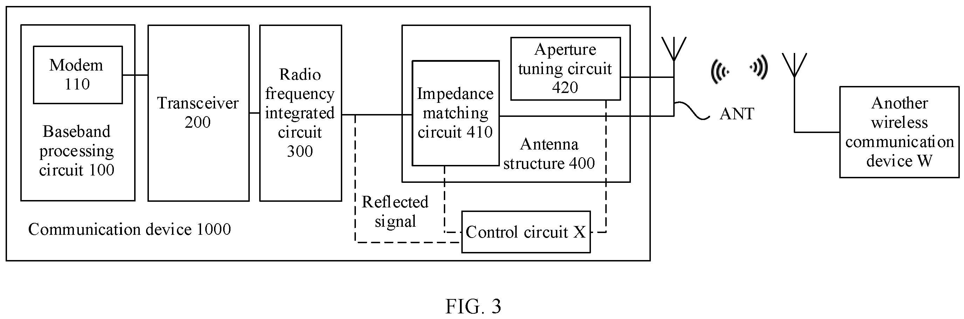

To resolve a problem that communication performance of the antenna structure 400 of the communication device 1000 is degraded because the antenna structure 400 is affected by a change of an external environment and/or a change of a device status of the device, in some possible implementations, as shown in FIG. 3, a control circuit X may be disposed in the communication device 1000. In addition, an impedance matching circuit 410 and/or an aperture tuning circuit 420 are/is disposed in the antenna structure 400. The impedance matching circuit 410 is connected between the radio frequency integrated circuit 300 and a receive/transmit antenna ANT (for example, a radiator of the antenna structure) of the antenna structure 400. The aperture tuning circuit 420 is connected to the receive/transmit antenna ANT of the antenna structure 400. The control circuit X may be coupled to a transmission point between the radio frequency integrated circuit 300 and the impedance matching circuit 410, to detect a signal reflection coefficient of the antenna structure 400 by obtaining a reflected signal of the antenna structure 400. The impedance matching circuit 410 is configured to adjust a transmission impedance between the radio frequency integrated circuit 300 and the receive/transmit antenna ANT. The aperture tuning circuit 420 is configured to adjust an antenna aperture value of the receive/transmit antenna ANT, so as to adjust a frequency resonance point and the like of the receive/transmit antenna ANT.

In a related technology, as shown in FIG. 3, the control circuit X may calculate a target parameter value based on a current hardware operating parameter of the communication device 1000, and update and set the target parameter value to a new hardware operating parameter. In the conventional technology, when the antenna structure 400 of the communication device 1000 operates at the current hardware operating parameter (for example, a current impedance magnitude and/or a current aperture value), the control circuit X may obtain a current signal reflection coefficient, and use an algorithm (for example, a neural network algorithm) based on the signal reflection coefficient to obtain the target parameter value through prediction and calculation. The target parameter value is an impedance parameter value that is obtained through prediction and calculation according to the algorithm and that can improve communication performance of the antenna structure 400. The control circuit X outputs a parameter control signal, and updates and sets, through the parameter control signal, the calculated target parameter value to the hardware operating parameter of the antenna structure 400. In this related technology, it is expected that the communication performance of the antenna structure 400 is improved based on an updated impedance magnitude. However, in actual application, communication performance degradation of the antenna structure 400 may be affected by different factors. In addition, on a radio frequency transmission path from the radio frequency integrated circuit 300 in the communication device 1000 to the antenna structure 400, a radio frequency-related hardware circuit feature is also very complex. Therefore, the device status information obtained only based on the current operating impedance magnitude cannot well represent a radio frequency-related hardware circuit characteristic, and cannot completely reflect an impact difference of different factors. The target parameter value obtained in this case has limited improvement on the communication performance of the antenna structure 400, and even has a negative gain.

To better improve communication performance of the antenna structure 400, in some possible implementations of this embodiment of this application, device status information in more dimensions may be obtained in an operating status switching manner of the antenna structure 400, and a corresponding target parameter value is determined based on the obtained device status information. In this case, as shown in FIG. 3, the control circuit X is configured to: switch the current hardware operating parameter of the antenna structure 400 from a first parameter value to a second parameter value; and output a first parameter control signal based on device status information of the communication device 1000 at the first parameter value and device status information of the communication device 1000 at the second parameter value, where the first parameter control signal is used to set the hardware operating parameter of the antenna structure 400 to a first target parameter value; and the hardware operating parameter includes an impedance magnitude of the antenna structure 400 and/or an aperture value of the antenna structure 400, and the device status information includes at least a signal reflection coefficient of the antenna structure 400.

For example, as shown in FIG. 3, the antenna structure 400 may include the impedance matching circuit 410 and/or the aperture tuning circuit 420. An operating status of the impedance matching circuit 410 and/or the aperture tuning circuit 420 is adjusted through the first reference control signal, to adjust the hardware operating parameter of the antenna structure 400.

In this embodiment of this application, the impedance matching circuit 410 may adjust a transmission impedance between the radio frequency integrated circuit 300 and the receive/transmit antenna ANT. A change of the transmission impedance directly changes a signal reflection coefficient on a transmission path of the radio frequency signal. Therefore, an impedance matching degree of the current impedance matching circuit 410 may be represented based on a value of the signal reflection coefficient. In addition, different aperture values of the receive/transmit antenna ANT cause different frequency resonance points of the receive/transmit antenna ANT. At different frequency resonance points, magnitudes of noise signals generated when a radio frequency signal passes through the receive/transmit antenna ANT are also different. These noise signals also affect the signal reflection coefficient of the antenna structure 400. In conclusion, regardless of adjusting the impedance matching circuit 410 to adjust the communication performance of the antenna structure 400, adjusting the aperture tuning circuit 420 to adjust the communication performance of the antenna structure 400, or adjusting the impedance matching circuit 410 and the aperture tuning circuit 420 to adjust the communication performance of the antenna structure 400, the signal reflection coefficient of the antenna structure 400 may be used as input data of a prediction algorithm of the control circuit X. Before the control circuit X performs an operation, the antenna structure 400 operates at the first parameter value. In this case, device status information such as a signal reflection coefficient at the first parameter value may be collected and obtained. Then, the control circuit X may adjust the antenna structure 400 to operate at the second parameter value. In this case, device status information such as a signal reflection coefficient at the second parameter value may be collected and obtained. The control circuit X uses the device status information at the first parameter value and the second parameter value as input data of the prediction algorithm, and predicts the first target parameter value based on the neural network algorithm. Compared with the conventional technology in which only the device status information at the current parameter value is used as the input data of the prediction algorithm, in this embodiment of this application, the device status information obtained based on the first parameter value and the second parameter value may represent change information based on more influencing factors, and more hardware characteristic information about a hardware circuit for radio frequency processing may be obtained.

In some possible implementations, the communication device 1000 further includes a sensor group, and the sensor group includes at least one device status sensor. The device status information further includes at least one of the following information collected by the at least one device status sensor: information about a relative location between the communication device 1000 and a user, motion information of the communication device 1000, and relative posture information of the communication device 1000 in free space.

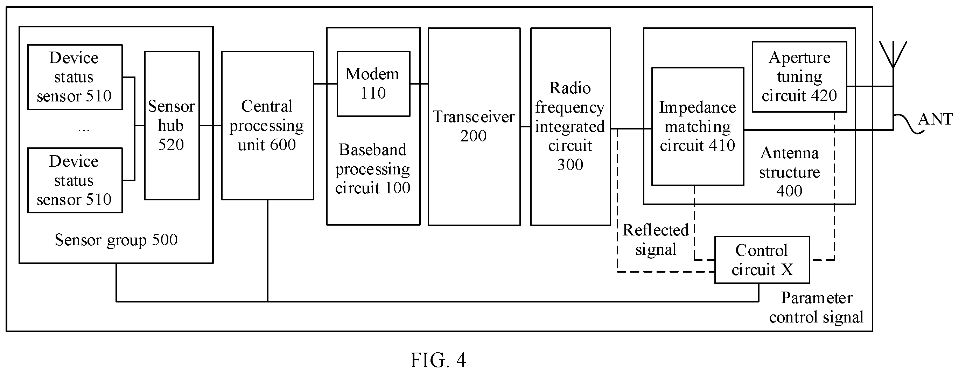

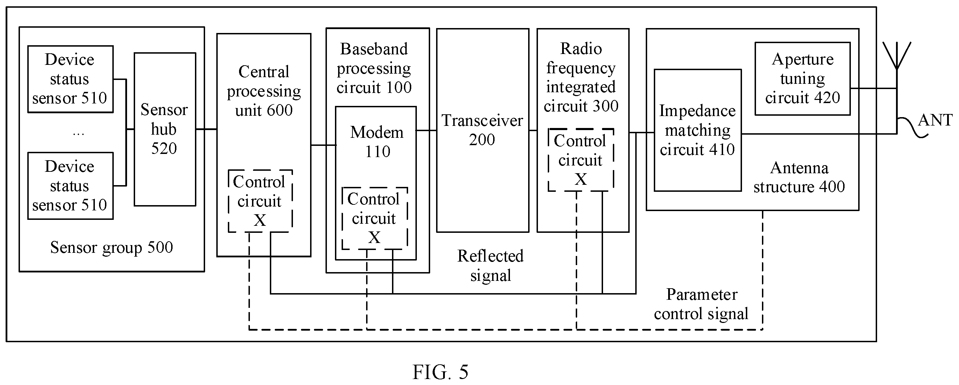

In an example, the communication device 1000 is a mobile phone. As shown in FIG. 4 and FIG. 5, in this case, the communication device 1000 includes a central processing unit (central processor unit, CPU) 600 and a sensor group 500. The sensor group 500 includes at least one device status sensor 510 and a sensor hub (sensor hub) 520. The at least one device status sensor 510 may include one or more of the following: a pressure sensor, a gyro (gyro) sensor, a barometric pressure sensor, a magnetic sensor, an acceleration sensor, a distance sensor, an optical proximity sensor, a fingerprint sensor, a temperature sensor, a touch sensor, an ambient optical sensor, and a bone conduction sensor, a specific absorption rate (specific absorption rate, SAR) sensor, a Hall (hall) sensor, or the like. This is not limited in embodiments of this application. In this embodiment of this application, the mobile phone S may collect device status information of some sensing types of the mobile phone S based on a central processing unit 600, the at least one device status sensor 510, and the sensor hub (sensor hub) 520, and the information includes but is not limited to information about a relative location between the mobile phone S and the user, motion information of the mobile phone S, relative posture information of the mobile phone S in free space, and information (for example, temperature information) about an environment in which the mobile phone S is located.

In an example, as shown in FIG. 4, the control circuit X may be a discrete device disposed outside the central processing unit 600, the baseband processing circuit 100, and the radio frequency integrated circuit 300. In this case, the control circuit X may be an artificial intelligence operation circuit. The artificial intelligence operation circuit may be a dedicated operation device that performs a neural network operation based on a software program, or may be a dedicated operation device that performs a neural network operation in a form of a hardware operation circuit like a spiking neural network circuit. For example, the artificial intelligence operation circuit may be a neural network processing unit (neural network processing unit, NPU) designed on a system on chip (system on chip, SOC) of the mobile phone S, or an operation circuit or an operation chip designed outside a system on chip (system on chip, SOC).

In an example, as shown in FIG. 5, the control circuit X may be integrated into the modem 110 in the baseband processing circuit 100, or the control circuit X may be integrated into the radio frequency integrated circuit 300, or the control circuit X may be integrated into the central processing unit 600.

For example, the radio frequency integrated circuit 300 may include a power amplifier, a first bandpass filter, and the like. The radio frequency integrated circuit 300 implements power amplification processing on the first radio frequency signal based on the power amplifier, and implements filtering processing on the first radio frequency signal via the first bandpass filter, and transmits a processed first radio frequency signal to the antenna structure 400.

For example, the radio frequency integrated circuit 300 may include a low noise power amplifier (low noise amplifier, LNA), a second bandpass filter, and the like. The radio frequency integrated circuit 300 performs power amplification processing on the second radio frequency signal via the low noise amplifier, filtering processing is performed on the second radio frequency signal based on the second bandpass filter, and transmits a processed second radio frequency signal to the transceiver 200.

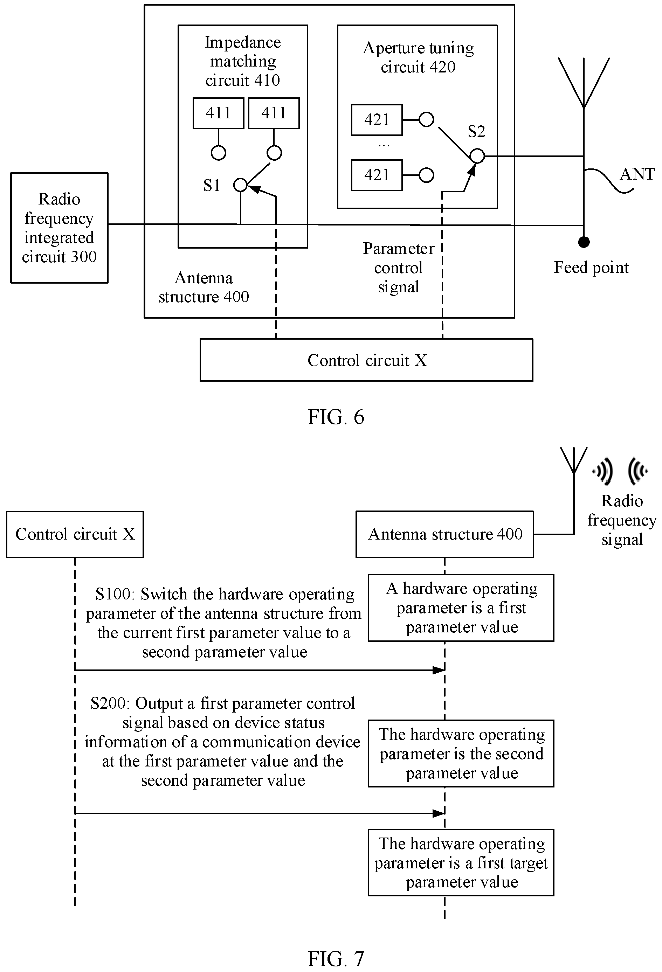

In a possible implementation, as shown in FIG. 6, the impedance matching circuit 410 includes a plurality of impedance tuning branches 411. The plurality of impedance tuning branches 411 may be disposed in series and/or in parallel between an output end of the radio frequency integrated circuit 300 and a feed point (feed point) of a radiator (that is, a receive/transmit antenna ANT) of the antenna structure 400. The control circuit X may adjust an impedance magnitude of the antenna structure 400 by adjusting an operating status of the impedance matching circuit 410, to implement impedance tuning (impedance tuning) of the antenna structure 400. For example, a plurality of impedance tuning branches 411 are disposed in parallel between the output end of the radio frequency integrated circuit 300 and the feed point (feed point) of the receive/transmit antenna ANT (that is, the radiator) of the antenna structure 400, and different impedance tuning branches 411 in the plurality of impedance tuning branches 411 may be switched to be conductively connected based on an impedance switching switch S1, so that the selected impedance tuning branch 411 is set to an on operating status. In FIG. 6, an example in which one impedance switching switch S1 controls gating of different impedance tuning branches 411 based on parameter control signals with different values is used for description. In actual application, more impedance switching switches S1 may also be selected to select the impedance tuning branch 411.

In a possible implementation, as shown in FIG. 6, the aperture tuning circuit 420 includes a plurality of aperture tuning branches 421. The plurality of aperture tuning branches 421 may be connected at a connection point of the receive/transmit antenna ANT (that is, the radiator) of the antenna structure 400. The control circuit X may adjust an aperture value of the antenna structure 400 by adjusting an operating status of the aperture tuning circuit 420, to implement aperture tuning (aperture tuning) of the antenna structure 400. Generally, the aperture tuning circuit 420 may be spaced from a feed point (feed point) of the radiator. The conductive connection between the aperture switching switch S2 and the different aperture tuning branches 421 may be adjusted based on different values of the reference control signal to set the selected aperture tuning branches 421 to the on operating status based on the implementation. In FIG. 6, an example in which one aperture switching switch S2 is controlled by parameter control signals with different values to implement gating of different aperture tuning branches 421 is used for description. In actual application, more aperture switching switches S2 may also be selected to select the aperture tuning branch 421.

For example, each impedance tuning branch 411 and each aperture tuning branch 421 may be a capacitor-based tuning branch, or may be an inductor-based tuning branch. In an actual application, adaptive design may be performed according to an actual product.

In the conventional technology, a first communication method is proposed. The first communication method should be applied to the communication device 1000 with the structure shown in FIG. 3. In the first communication method, a first neural network algorithm is written into the control circuit X. Prediction and calculation are performed, according to the first neural network algorithm, on the input device status information corresponding to the current hardware operating parameter, to obtain a target parameter value. A hardware operating parameter of the antenna structure 400 is adjusted based on the target parameter value, to optimize communication performance of the antenna structure 400.

In an existing solution, use case classification is performed on a scenario of the communication device 1000 in the first neural network algorithm. Use cases are preset based on scenarios, and database mapping tables are created for use cases in different scenarios. Two levels of classification algorithms may be set in the first neural network algorithm. Performing operation processing on the device status information at the current parameter value based on a first-level classification algorithm, to determine a use case. Then, the final target parameter value is determined based on a second-level classification algorithm and a preset database mapping table in a table lookup manner. In this implementation, the input device status information is obtained based on a current parameter value, and a feature input item of the input device status information is insufficient to represent impact of an actual environment factor and a feature change of a hardware circuit. Then, the impedance matching circuit 410 and/or the aperture tuning circuit 420 have various types of on/off states and application scenarios, and a database mapping table needs to have many entry dimensions to implement application of the algorithm. In this case, it is difficult to prepare a table, and it is difficult to completely cover and accurately represent all scenario types. Therefore, the algorithm is prone to a large quantity of prediction errors, and anti-noise performance of the algorithm is poor. Finally, a prediction manner in which use case classification is combined with table lookup is used. A processing procedure of the algorithm is complex, and adjustment efficiency and timeliness are low. In addition, this prediction manner loses an adaptive capability of the adjustment algorithm to cope with a scenario change, and a prediction result of this prediction manner is based on a given optional parameter in a preset classification scenario. In this manner, optimal real-time performance adjustment cannot be implemented.

In an existing solution, two prediction algorithm models are designed in the first neural network algorithm, and the target parameter value is calculated based on a combination of the two prediction algorithm models. In this case, the two prediction algorithm models are respectively an antenna impedance estimation algorithm model and an antenna efficiency estimation algorithm model. Impedance prediction and calculation are performed on the device status information at the current parameter value based on the antenna impedance estimation algorithm model, and a target parameter value is obtained based on a calculation result and a preset use case database. The target parameter value may be used to adjust an impedance magnitude of the impedance matching circuit 410. Then, antenna efficiency (that is, the communication performance of the antenna) at the target parameter value is predicted according to an antenna efficiency estimation algorithm. A prediction result of the antenna efficiency and the antenna efficiency at the current parameter value are used to determine whether to update and set the target parameter value to the hardware operating parameter of the impedance matching circuit 410 of the antenna structure 400. In this implementation, the input device status information is obtained based on a current parameter value, and a feature input item of the input device status information is insufficient to represent impact of an actual environment factor and a feature change of a hardware circuit. Then, a use case database still needs to be preset in advance, and a target parameter value is obtained by combining a prediction result with the use case database. Finally, in this manner, two models of impedance estimation calculation and efficiency estimation calculation need to be performed, resulting in low adjustment efficiency and insufficient real-time performance. In this manner, optimal real-time performance adjustment cannot be implemented.

An embodiment of this application provides a second communication method. The second communication method is applied to the communication device 1000 including the structures shown in FIG. 3, FIG. 4, FIG. 5, and FIG. 6. The second communication method may include the following operations of step S100 and step S200 shown in FIG. 7.

S100: Switch a hardware operating parameter of an antenna structure 400 from a current first parameter value to a second parameter value.

As shown in FIG. 3, the communication device 1000 may exchange a radio frequency signal with another wireless communication device W, to implement wireless communication. In this process, the radio frequency integrated circuit 300 may transmit a first radio frequency signal to the antenna structure 400, to transmit the first radio frequency signal to the another wireless communication device W based on the antenna structure 400. The radio frequency integrated circuit 300 may alternatively obtain, from the antenna structure 400, a second radio frequency signal transmitted by the another wireless communication device W, and perform signal processing on the second radio frequency signal.

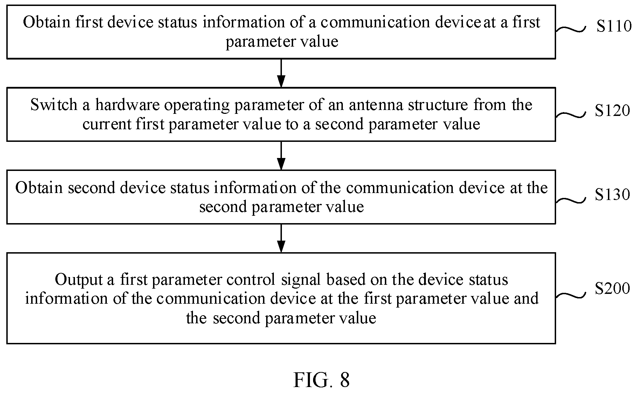

For example, as shown in FIG. 8, step S100 may include the following sub-operations of step S110 to step S130.

S110: Obtain first device status information of the communication device 1000 at the first parameter value.

In this embodiment of this application, the first parameter value is a current hardware operating parameter when the antenna structure 400 receives/transmits a radio frequency signal. When communication performance of the antenna structure 400 of the communication device 1000 is to be optimized, a target parameter value needs to be obtained through prediction and calculation. Before prediction and calculation, the first device status information of the communication device 1000 needs to be collected at the current hardware operating parameter (that is, the first parameter value), for subsequent prediction and calculation.

S120: Switch the hardware operating parameter of the antenna structure 400 from the current first parameter value to the second parameter value.

S130: Obtain second device status information of the communication device 1000 at the second parameter value.

In some possible implementations, when optimization processing needs to be performed on communication performance of the antenna structure 400, the first device status information of the communication device 1000 at the first parameter value may be obtained. Then, the hardware operating parameter of the antenna structure 400 is switched from the current first parameter value to the second parameter value, and then the second device status information of the communication device 1000 at the second parameter value is obtained. In this case, compared with the conventional technology in which only the device status information at the current hardware operating parameter is obtained, in this embodiment of this application, the first device status information at the first parameter value and the second device status information at the second parameter value have more multi-dimensional feature inputs. In this embodiment of this application, the device status information obtained based on the first parameter value and the second parameter value may represent change information based on more influencing factors, and more hardware characteristic information about a hardware circuit for radio frequency processing may be obtained.

For example, the second parameter value has a plurality of preset fixed values, and the plurality of fixed values one-to-one correspond to a plurality of frequency ranges of the radio frequency signal. Different frequency ranges may be divided based on a frequency band of a radio frequency signal that can be used by the communication device 1000 for communication. In an example, corresponding second parameter values with values may be set for different frequency bands. In an example, a corresponding second parameter value with a value may be set for a subband of each frequency band. In an example, a plurality of frequency ranges may be divided based on an area division that is more refined than frequency band division, and a corresponding second parameter value is set for each frequency range.

In this embodiment of this application, the antenna structure 400 presents different hardware operating characteristics in different frequency ranges. Therefore, corresponding second parameter values with fixed values may be designed for radio frequency signals in different frequency ranges. A principle of setting the value of the second parameter value is that the antenna structure 400 has good communication performance when receiving/transmitting a radio frequency signal in a corresponding frequency range. In view of this, when receiving/transmitting a radio frequency signal in a frequency range for communication, related first device status information is obtained based on the current first parameter value. Then, the hardware operating parameter is switched from the first parameter value to the second parameter value. At the second parameter value, the antenna structure 400 can still ensure good communication performance, so that a switching action does not cause obvious impact on communication. In addition, the second parameter value is a fixed value in a corresponding frequency range. When the antenna structure 400 receives/transmits a radio frequency signal in a fixed frequency range, current real-time hardware operating parameters may be different (that is, values of the first parameter value are different), but a value of the second parameter value is known. Therefore, when the control circuit X performs algorithm prediction, both the device status information obtained based on the first parameter value and the device status information obtained based on the second parameter value may represent a change characteristic of a current influencing factor, and represent an impact change characteristic of a hardware characteristic of a hardware circuit of the radio frequency signal. Then, the second parameter value is used as a fixed parameter value. With the fixed parameter value, there is also a difference between second device status information actually obtained in each prediction and calculation operation and second device status information actually obtained based on the second parameter value in another prediction and calculation operation, and the difference may represent different influencing factors and different hardware characteristics between different prediction and calculation operations. Finally, in most cases, current hardware operating parameters (that is, first parameter values) corresponding to different prediction and calculation operations are different. A conventional algorithm model cannot well identify, based on the first device status information at the first parameter value, a difference between influencing factors and hardware characteristics between different prediction and calculation operations. The second device status information at the second parameter value with the fixed value may be used as a reference for algorithm processing. Accuracy of a prediction result of a neural network algorithm depends to a large extent on accuracy of describing target feature information by input data. Based on the foregoing implementation, in embodiments of this application, dimensions of data input by the algorithm model of the control circuit X can be enriched, and the input data can better reflect a difference between environmental factors of communication device 1000 and a difference between hardware characteristics of hardware processing circuits of radio frequency signals. In this way, accuracy of predicting the first target parameter value is improved. The hardware operating parameter of the antenna structure 400 is adjusted based on the more accurate first target parameter value, so that communication performance of the antenna structure 400 can be improved more greatly, and a probability of a negative gain (that is, communication performance is lower at the first target parameter value) can be reduced as much as possible.

S200: Output a first parameter control signal based on the device status information of the communication device 1000 at the first parameter value and the device status information of the communication device 1000 at the second parameter value.

In some possible implementations, as shown in FIG. 3, FIG. 4, FIG. 5, and FIG. 6, the control circuit X may generate the first parameter control signal based on the collected first device status information of the communication device 1000 at the first parameter value and the collected second device status information of the communication device 1000 at the second parameter value. The first parameter control signal is used to set the hardware operating parameter of the antenna structure 400 to the first target parameter value. In this embodiment of this application, in the second communication method, a second neural network algorithm is written into the control circuit X. The second neural network algorithm directly outputs the first parameter control signal based on the device status information used as an input feature item, and directly uses the first parameter control signal as a prediction result to adjust the hardware operating parameter. Compared with the solution in which the target parameter value is determined based on the prediction result and a preset use case database in the first communication method, in this embodiment of this application, only one algorithm model is used, and an output result of the algorithm model is the prediction result. In this implementation, an adjustment procedure in this solution is simple. After the data is input into the second neural network algorithm, the hardware operating parameter can be directly adjusted through a fast operation. The adjustment on the hardware operating parameter has high real-time performance, does not need to depend on the preset use case database, and can better adapt to a scenario change.

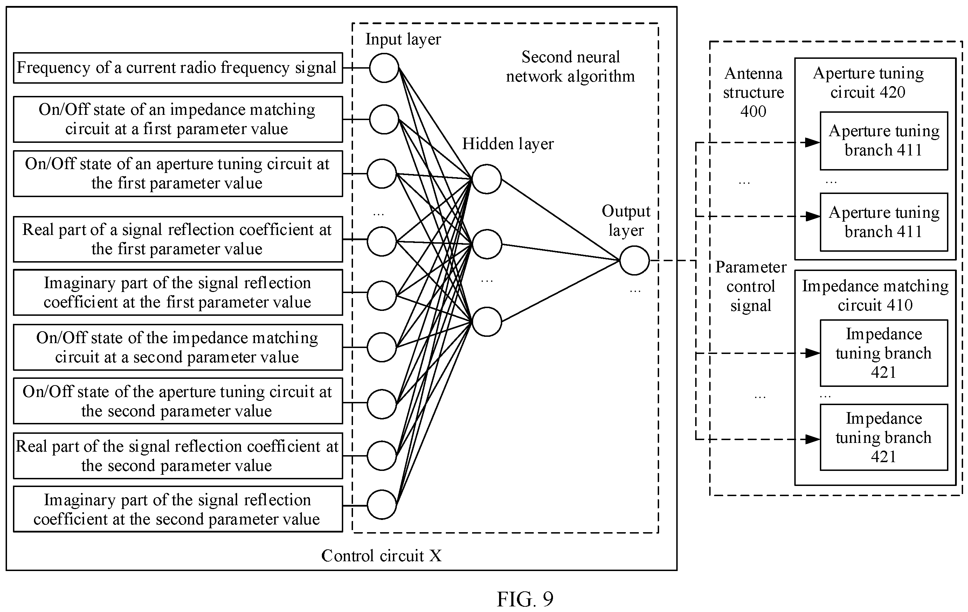

For example, as shown in FIG. 9, the first parameter control signal includes a plurality of code bits. When the control circuit X performs one prediction and calculation operation, an output of a neural network algorithm is one result, that is, a first parameter control signal including the plurality of code bits. In an example, when the communication performance of the antenna structure 400 is optimized by adjusting an impedance magnitude of the antenna structure 400 based on the neural network algorithm, a plurality of code bits of the output first parameter control signal one-to-one correspond to a plurality of impedance tuning branches 411. Based on different prediction and calculation results, values of all code bits are different, to adjust a corresponding impedance tuning branch 411 to be in an off operating status or an on operating status, thereby adjusting the impedance magnitude of the antenna structure 400. In an example, when the communication performance of the antenna structure 400 is optimized by adjusting an aperture value of the antenna structure 400 based on the neural network algorithm, a plurality of code bits of the output first parameter control signal one-to-one correspond to the plurality of aperture tuning branches 421. Based on different prediction and calculation results, values of all code bits are different, to adjust a corresponding aperture tuning branch 421 to be in an off operating status or an on operating status, thereby adjusting the aperture value of the antenna structure 400. In an example, when both the impedance magnitude of the antenna structure 400 and the aperture value of the antenna structure 400 need to be adjusted, the plurality of code bits of the first parameter control signal one-to-one correspond to the plurality of impedance tuning branches 411 and the plurality of aperture tuning branches 421. Each bit may control a corresponding switch to be turned on or off.

In some possible implementations, as shown in FIG. 3, FIG. 4, and FIG. 5, the device status information may include a signal reflection coefficient of the antenna structure 400.

In an example, as shown in FIG. 4 and FIG. 5, the device status information may further include sensor data collected by a sensor group 500. The sensor data includes but is not limited to information about a relative location between the communication device 1000 and a user, motion information of the communication device 1000, relative posture information of the communication device 1000 in free space. The sensor data may further include environment information of the communication device and the like.

In an example, the device status information may further include at least one of the following information: a frequency of a radio frequency signal and signal quality information of the radio frequency signal. For example, a parameter like reference signal received power (reference signal received power, RSRP) representing wireless signal strength may be used as a parameter for measuring the signal quality information of the radio frequency signal.

In an example, on/off state information of the impedance matching circuit 410 and/or the aperture tuning circuit 420 may be further input into a second neural network algorithm as device status information.

In some possible implementations, before a product of the communication device 1000 is delivered from a factory, model training needs to be performed on the second neural network algorithm in the control circuit X. During model training, data label classification may be performed on the device status information input according to the second neural network algorithm. In addition, encoding may be performed for a plurality of impedance tuning branches 411 of the impedance matching circuit 410. For example, the impedance matching circuit 410 includes four impedance tuning branches 411, and may correspond to a four-bit encoded value xxxx, a value of x of each code bit may be 0 or 1, and 0 and 1 respectively correspond to an off state or an on state of an impedance tuning branch 411. Similarly, an example in which there are four aperture tuning branches 421 is used. An encoded value XXXX corresponding to four code bits may also be obtained, and a value of each code bit may also be 0 or 1. 0 and 1 are respectively used to correspond to an aperture tuning branch 421 that is in an off state or an on state. These encoded values may be on/off state information of the impedance matching circuit 410 and the aperture tuning circuit 420. In a training phase, label classification is performed on a dataset (that is, device status information including signal reflection coefficients, frequencies, sensing information, signal quality information, and the like in different on/off states), and then the dataset obtained through the label classification is input into the second neural network algorithm for model training. A specific algorithm of the second neural network model is not limited in embodiments of this application. FIG. 9 is an example of a diagram of an architecture of a second neural network algorithm model. The second neural network algorithm may include a plurality of levels of algorithm layers (for example, an input layer, a hidden layer, and an output layer), and each algorithm layer may include one or more arithmetic expressions. Different types of device status information are input into a multi-level algorithm layer of the second neural network algorithm, and a parameter control signal is finally output. The values of the plurality of code bits of the parameter control signal correspond to the state adjustment prediction structure of the switch that needs to be adjusted. The parameter and the like of the second neural network algorithm are adjusted, so that after a plurality of iterative operations, a finally output parameter control signal can meet a requirement that the hardware operating parameter of the antenna structure 400 has good performance after the adjustment. In this case, model training of the second neural network algorithm is converged, and an actual target parameter value may be predicted based on the second neural network algorithm obtained through training convergence. The foregoing different types of device status information may include a frequency of a current radio frequency signal, an on/off state of the impedance matching circuit 410 at the first parameter value, an on/off state of the aperture tuning circuit 420 at the first parameter value, a real part of a signal reflection coefficient at the first parameter value, an imaginary part of the signal reflection coefficient at the first parameter value, an on/off state of the impedance matching circuit 410 at the second parameter value, an on/off state of the aperture tuning circuit 420 at the second parameter value, a real part of the signal reflection coefficient at the second parameter value, and an imaginary part of the signal reflection coefficient at the second parameter value, and the like.

The foregoing embodiment is described by using an example in which the parameter control signal is a digital signal including a plurality of bits. In some examples, the parameter control signal may also be an analog signal with different voltage values. For example, when the aperture tuning circuit 420 switches different aperture tuning branches 421 based on one aperture switching switch S2, the aperture switching switch S2 may be controlled, based on reference control signals of different voltage values, to switch an aperture tuning branch 421 corresponding to gating. Similarly, one impedance switching switch S1 may also be controlled, based on reference control signals of different voltage values, to switch an impedance tuning branch 411 corresponding to gating.

In some possible implementations, the communication device 1000 may periodically perform the operations of step S100 and step S200, to dynamically adjust communication performance of the antenna structure 400 in real time. For example, the current hardware operating parameter (that is, the first parameter value) of the antenna structure 400 is switched to the second parameter value at a fixed time interval, and the second neural network algorithm is run based on the first parameter value obtained in the current switching operation and the device status information corresponding to the second parameter value, to obtain the first adjustment control signal indicating the first target parameter value. In an example, a value of the fixed time interval may be less than 1000 milliseconds (ms). In this embodiment of this application, when a value of the fixed time interval is selected, it needs to be considered that the switching time interval cannot be excessively long. Because a hardware operating parameter that remains unchanged in an excessively long time interval may cause a case in which a current hardware operating parameter cannot meet a communication requirement in a scenario in which the hardware operating parameter changes in real time, a degree of communication signal quality deterioration reaches a degree that can be felt by a human body. In addition, the interval of switching cannot be too short, the reference control signal output by the control circuit X is transmitted to the impedance matching circuit 410 and the aperture tuning circuit 420 of the antenna structure 400 on a physical entity, and a specific transmission distance and transmission time are also required (but the transmission time is usually at a µs level, and varies based on a disposing location of the control circuit X). In addition, it also takes a specific time for the control circuit X to obtain the device status information and perform an operation of the second neural network algorithm (time of these operations is usually at the µs level). Therefore, although transmission of the parameter control signal, obtaining of the device status information, operation of the second neural network algorithm, and the like are time-consuming, the time consumption is very short. In comprehensive consideration, an interval between two adjacent prediction and calculation operations may be set to be less than about 1000 milliseconds.

In some possible implementations, operating time of the antenna structure 400 at the first parameter value is greater than or equal to operating time of the antenna structure 400 at the second parameter value. In this embodiment of this application, in most cases, a first parameter value used in each prediction and calculation operation is a target parameter value obtained based on a previous prediction technology operation. Therefore, theoretically, the communication performance of the antenna structure 400 at the first parameter value is basically better than the communication performance at the second parameter value. Therefore, the operating time at the first parameter value may be set to be greater than or equal to the operating time at the second parameter value.

For example, each time a prediction and calculation operation is performed based on the second neural network algorithm, the first device status information of the communication device 1000 at the first parameter value and the second device status information of the communication device 1000 at the second parameter value need to be obtained. In actual application, in each prediction and calculation operation, the second device status information at the second parameter value may be obtained only once (for example, the reflected signal of the antenna structure 400 at the second parameter value is obtained only once to calculate the signal reflection coefficient). Corresponding to one first parameter value, the first device status information at the first parameter value may be obtained for one or more times. Because the operating time of the antenna structure 400 at the first parameter value is usually greater than the operating time of the antenna structure 400 at the second parameter value, the first device status information obtained at different moments in the operating time period of the first parameter value may cause the first target parameter value obtained through prediction and calculation on the parameter with different values. Therefore, to ensure as much as possible that the first device status information at the first parameter value input into the second neural network algorithm can more accurately represent the environmental factor and the hardware circuit characteristic in real time, the first device status information at the first parameter value may be collected for a plurality of times at different moments. For example, the reflected signal of the antenna structure 400 is collected, a plurality of reflection coefficients corresponding to the first parameter value may be calculated based on reflected signals collected for a plurality of times, a reflection coefficient representing the first parameter value is obtained through calculation based on the plurality of reflection coefficients, and the reflection coefficient is input into the second neural network algorithm. In an example, weighting may be performed on a plurality of reflection coefficients, and one reflection coefficient representing the first parameter value is obtained through weighting calculation. During weighting, a larger weight value may be assigned to a reflection coefficient collected in a shorter time. As collecting time goes by, a reflection coefficient collected in a shorter time can better represent a real-time change. In an example, the plurality of reflection coefficients may be averaged to obtain a reflection coefficient representing the first parameter value. In actual application, an adaptive calculation manner may be selected according to different situations.

In some examples, when communication performance of the antenna structure 400 of the communication device 1000 is good, a prediction and calculation operation on a new target parameter value may also be stopped in a period of time. For example, when the signal reflection coefficient of the antenna structure 400 is less than a specific threshold, it indicates that current communication performance is good, and a new prediction and calculation operation may be stopped. In this implementation, an optimal hardware operating parameter can be maintained. This avoids a case in which optimization effect of the target parameter value obtained through prediction and calculation is not as good as that before the optimization. This reduces a quantity of prediction and calculation operations to reduce power consumption.

In an example, in some special cases, the communication device 1000 may also actively trigger to perform a new prediction and calculation operation.

For example, when the communication device 1000 receives or transmits the radio frequency signal in the first frequency range based on the antenna structure 400, if the target parameter value needs to be obtained through prediction and calculation, the current hardware operating parameter (that is, the current first parameter value) is switched to the second parameter value corresponding to the first frequency range, and the second neural network algorithm is run based on the first device status information of the communication device 1000 at the current first parameter value and the second device status information of the communication device 1000 at the second parameter value, to predict the first target parameter value. In the prediction and calculation process, if the communication device 1000 suddenly switches to receiving or transmitting the radio frequency signal in a second frequency range based on the antenna structure 400, the control circuit X stops a current prediction and calculation operation in response to a frequency change of the radio frequency signal, and triggers a new prediction and calculation operation. In the new prediction and calculation operation, the current hardware operating parameter is switched to the second parameter value corresponding to the second frequency range. In addition, the first target parameter value is obtained through prediction and calculation again based on the second device status information at the second parameter value corresponding to the second frequency range.

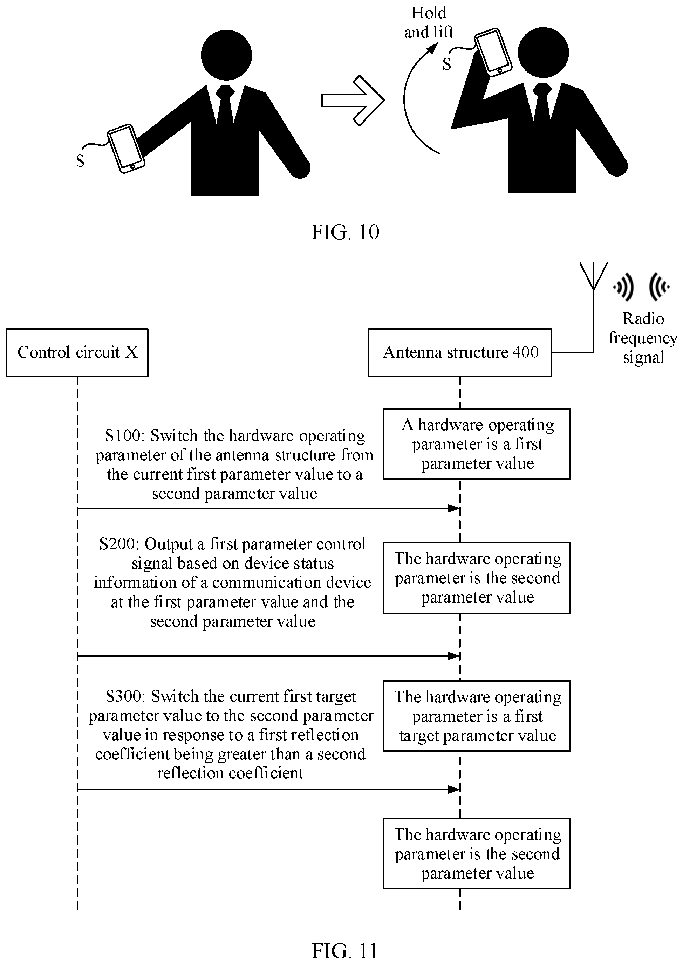

For example, when detecting changes of some parameters, the communication device 1000 may also actively trigger to perform a prediction and calculation operation. For example, when it is detected, based on the sensing information, that a current acceleration of the communication device 1000 increases, a current environmental factor changes, current communication signal quality decreases, or a current signal reflection coefficient of the antenna structure 400 is greater than a specific value, the control circuit X may actively obtain the first device status information at a current hardware operating parameter (that is, the first parameter value), switch the hardware operating parameter to a second parameter value of a corresponding frequency range, obtain second device status information corresponding to the second parameter value, and perform prediction and calculation based on the obtained device status information. As shown in FIG. 10, an example in which the communication device 1000 is a mobile phone S is used. When making a call, a user holds tightly and lifts the mobile phone, and places the mobile phone beside an ear. In this process, the mobile phone S is affected by actions of holding tightly and lifting, and an acceleration of the mobile phone S changes, which may affect communication performance of the antenna structure 400. Alternatively, actions of holding tightly and lifting by the user just blocks the antenna structure 400 of the mobile phone S, thereby affecting communication performance of the antenna structure 400. Alternatively, in a process of holding tightly and lifting the mobile phone S, a relative location between the mobile phone S and another object in free space changes (for example, a location relative to the ground changes, for example, the mobile phone S is closer to a head of a human body). These factors may also affect communication performance of the antenna structure 400. The mobile phone S may actively trigger, in response to one or more changes of the use status (or another change of the use status that is not described as an example), to perform a new prediction and calculation operation in step S100 and step S200.

In some possible implementations, to avoid negative optimization of communication performance of the antenna structure 400 caused by the first target parameter value obtained through prediction and calculation, as shown in FIG. 11, the second communication method may further include the following steps. S300: Switch a current first target parameter value to the second parameter value in response to a first reflection coefficient being greater than the second reflection coefficient. The first reflection coefficient is a corresponding signal reflection coefficient when the antenna structure 400 operates at the first target parameter value, and the second reflection coefficient is a corresponding signal reflection coefficient when the antenna structure 400 operates at the second parameter value.

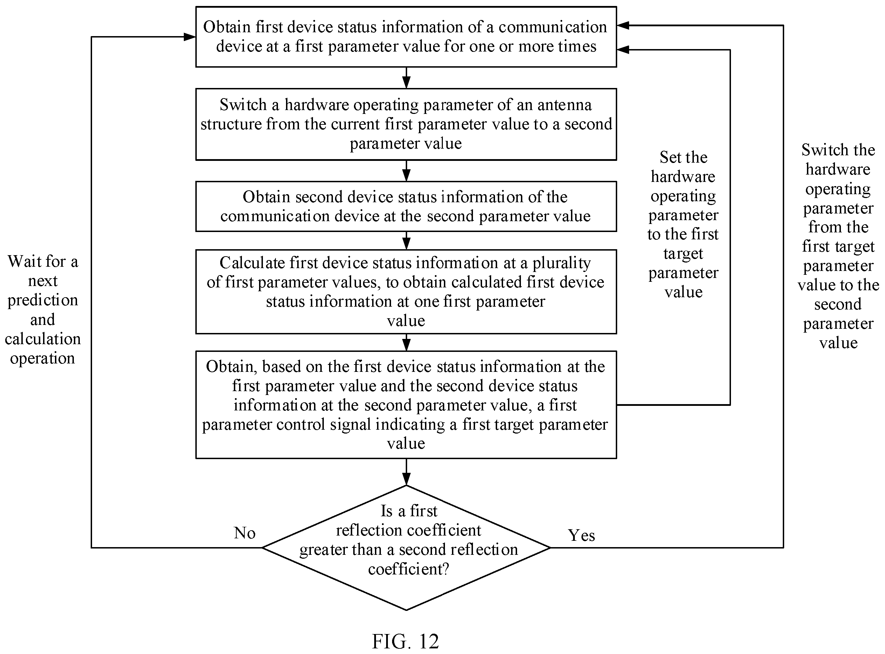

For example, FIG. 12 is a diagram of an execution procedure of the control circuit X. In step S100, the control circuit X first obtains first device status information of the communication device 1000 when the antenna structure 400 operates at the first parameter value. In this case, the control circuit X may obtain the first device status information at the first parameter value for one or more times. Then, the control circuit X switches the hardware operating parameter of the antenna structure 400 from the current first parameter value to the second parameter value, and obtains second device status information at the second parameter value. Then, in step S200, if the first device status information at the first parameter value is obtained for a plurality of times in step S100, the control circuit X further calculates first device status information (for example, a reflection coefficient) at the plurality of first parameter values, to obtain calculated first device status information at one first parameter value. The control circuit X runs a second neural network algorithm based on the first device status information at the first parameter value and the second device status information at the second parameter value, to obtain a first parameter control signal indicating a first target parameter value. The control circuit X sets the hardware operating parameter of the antenna structure 400 to the first target parameter value through the first parameter control signal. Then, the control circuit X may obtain the first reflection coefficient at the first target parameter value, and compare the first reflection coefficient with a second reflection coefficient obtained based on the second parameter value when the first parameter control signal is calculated. If the first reflection coefficient is greater than the second reflection coefficient, it indicates that communication performance at the first target parameter value is inferior to communication performance at the first parameter value. In this case, the control circuit X switches the hardware operating parameter of the antenna structure X from the current first target parameter value to the second parameter value. On the contrary, if the first reflection coefficient is less than or equal to the second reflection coefficient, it indicates that the communication performance at the first target parameter value is not inferior to the communication performance at the second parameter value. In this case, after the current prediction and calculation operation, the hardware operating parameter of the antenna structure 400 is kept at the first target parameter. After the current prediction and calculation operation is adjusted, a finally determined hardware operating parameter (that is, the first target parameter value or the second parameter value) is used as the first parameter value of a next prediction and calculation operation. In this implementation, a current hardware operating parameter (that is, the first parameter value) on which each prediction and calculation operation is based is dynamically determined in real time after adjustment in a previous prediction and calculation operation is completed, and a second parameter value on which each prediction and calculation operation is based is fixedly determined based on a frequency value of a radio frequency signal during actual communication. In this manner, the first parameter value is obtained through closed-loop tuning of a plurality of prediction and calculation operations, and the second parameter value is a default value. The neural network operation is performed based on the first parameter value and the second parameter value, and is not limited to a fixed preset scenario classification, so that real-time performance of the solution and adaptability to different scenarios can be enhanced.

In this embodiment of this application, after the first target parameter value is obtained based on a one-time prediction technical operation, the hardware operating parameter of the antenna structure 400 is set to the first target parameter value. Because the second neural network algorithm obtained through training convergence has high precision, in most cases, the first target parameter value obtained through prediction and calculation can improve communication performance of the antenna structure 400. However, in some extremely low probability cases, the first target parameter value may cause negative optimization of communication performance of the antenna structure 400. To avoid this case, after each prediction and calculation operation, the signal reflection coefficient of the antenna structure 400 at the first target parameter may be obtained, to generate the first reflection coefficient. The second reflection coefficient is generated based on the signal reflection coefficient that is of the antenna structure 400 at the second parameter value and that is obtained during the prediction and calculation operation. A smaller reflection coefficient indicates better communication performance. Because the second parameter value is a value obtained through an experiment when the communication device 1000 is designed, the second parameter value can meet that the antenna structure 400 has good communication performance (at least can meet a basic communication requirement) in most cases in a corresponding frequency range. Therefore, communication performance at the first target parameter value may be determined based on comparison between the first reflection coefficient and the second reflection coefficient. If the communication performance at the first target parameter value is better than or equal to the communication performance at the second parameter value, the first target parameter value may be kept as the hardware operating parameter of the antenna structure 400. If the communication performance at the first target parameter value is inferior to the communication performance at the second parameter value, the hardware operating parameter needs to be switched from the current first target parameter value to the second parameter value, to avoid negative optimization of the communication performance.

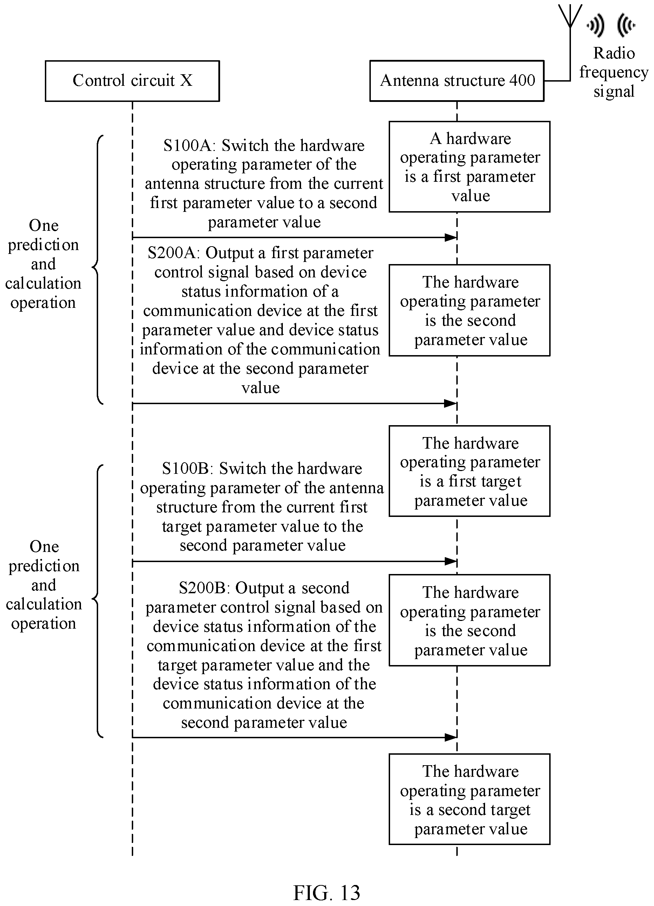

For example, the communication device 1000 may perform prediction and calculation operations including step S100 and step S200 in a plurality of periodicities. Two adjacent prediction and calculation operations are used as an example. The control circuit X may perform a second communication method including the following steps S100A, S200A, S100B, and S200B shown in FIG. 13.

S100A: Switch a hardware operating parameter of the antenna structure 400 from a current first parameter value to a second parameter value.

S200A: Output a first parameter control signal based on device status information of the communication device 1000 at the first parameter value and device status information of the communication device 1000 at the second parameter value.

In this embodiment of this application, the first parameter control signal may be obtained based on one prediction and calculation operation in step S100A and step S200A, and the hardware operating parameter of the antenna structure 400 is adjusted to a first target parameter value based on the first parameter control signal, to complete optimization processing once.

S100B: Switch the hardware operating parameter of the antenna structure 400 from the current first target parameter value to the second parameter value.

In this embodiment of this application, after one prediction and calculation operation is performed in step S100A and step S200A, another prediction and calculation operation may be further performed. In this case, the first target parameter value obtained in the previous prediction and calculation operation is used as the first parameter value in step S100B. In step S100B, the control circuit X may obtain first device status information at the current first target parameter value. Then, the hardware operating parameter of the antenna structure 400 is switched from the first target parameter value to the second parameter value, and second device status information at the second parameter value is obtained.

In an example, when a frequency range of a radio frequency signal does not change, the second parameter value in step S100B is equal to the second parameter value in step S100B. In an example, after step S200A and before S100B, if the frequency range of the radio frequency signal changes, the second parameter value in step S100B is a second parameter value corresponding to a changed frequency range.

S200B: Output a second parameter control signal based on device status information of the communication device 1000 at the first target parameter value and the device status information of the communication device 1000 at the second parameter value.

In this embodiment of this application, the second parameter control signal may be obtained through calculation based on the device status information of the communication device 1000 at the first target parameter value and the device status information of the communication device 1000 at the second parameter value. The second parameter control signal is used to update and set the hardware operating parameter of the antenna structure 400 to a second target parameter value. The hardware operating parameter of the antenna structure 400 is updated and set to the second target parameter value based on the second parameter control signal, to complete another optimization operation.

For technical principles and beneficial effect of one prediction and calculation operation in step S100A and step S200A and another prediction and calculation operation in step S100B and step S200B, refer to related descriptions in the embodiments of step S 100 and step S200. Details are not described herein again.

In the second communication method in this embodiment of this application, each time a prediction and calculation operation is performed on a hardware operating parameter of the antenna structure 400, the on/off state of the impedance matching circuit 410 and/or the on/off state of the aperture tuning circuit 420 of the antenna structure 400 are/is switched, device status information in different on/off states is collected, and neural network algorithm processing is performed based on the device status information in the different on/off states, to obtain a target parameter value for optimization. Compared with a conventional solution in which neural network algorithm processing is performed based on device status information in a current operating on/off state, in this solution, the algorithm inputs more data feature dimensions, and can more accurately represent changes of an environment factor and a hardware characteristic of the communication device 1000. Then, in the switching on/off state, an on/off state at the second parameter value is set. The second parameter value is a fixed parameter value that is set based on different frequency ranges. Based on the second parameter value, it can be ensured that communication performance does not deteriorate in a process of switching between different on/off states, a data feature dimension representing an environment factor and a hardware feature change can be improved, and the second parameter value may be used as a reference for analyzing device status information at the first parameter value that being used for operating currently. This greatly improves optimization performance. Finally, compared with a solution in which a multi-level algorithm or a combination of a plurality of algorithms is used, in the second neural network algorithm, only one algorithm model needs to be set, an adjustment procedure is simple, and table lookup is not required. An output structure of the second neural network algorithm is a parameter control signal with a plurality of code bits encoded. The plurality of code bits of the parameter control signal may directly correspond to adjusting the on/off state of the impedance matching circuit 410 and/or the on/off state of the aperture tuning circuit 420. Compared with an existing first neural network algorithm, there is no need to additionally perform procedure processing such as table lookup, so that an adjustment procedure is faster and timelier. In this embodiment of this application, communication performance of the antenna structure 400 can be optimized more accurately and timely by using the foregoing implementation solution.

An embodiment of this application further provides a computer-readable storage medium. The computer-readable storage medium includes instructions. When the instructions are run on a processor, the processor is enabled to perform the second communication method described in the foregoing embodiment.

The processor in embodiments of this application may be a chip. For example, the processor may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated in another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, that is, may be located in one device, or may be distributed on a plurality of devices. Some or all of the modules may be selected based on actual requirements to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication device, comprising a control circuit, a radio frequency integrated circuit, and an antenna structure, wherein
the radio frequency integrated circuit is configured to: transmit and/or receive a radio frequency signal based on the antenna structure; and
the control circuit is configured to: switch a hardware operating parameter of the antenna structure from a current first parameter value to a second parameter value; and output a first parameter control signal based on device status information of the communication device at the first parameter value and device status information of the communication device at the second parameter value, wherein the first parameter control signal is used to set the hardware operating parameter of the antenna structure to a first target parameter value; and the hardware operating parameter comprises an impedance magnitude of the antenna structure and/or an aperture value of the antenna structure, and the device status information comprises at least a signal reflection coefficient of the antenna structure.

2. The communication device according to claim 1, wherein the control circuit is further configured to:
switch the hardware operating parameter of the antenna structure from the current first target parameter value to the second parameter value, and output a second parameter control signal based on device status information of the communication device at the first target parameter value and the device status information of the communication device at the second parameter value, wherein the second parameter control signal is used to set the hardware operating parameter of the antenna structure to a second target parameter value.

3. The communication device according to claim 1, wherein after outputting the first parameter control signal, the control circuit is further configured to:
switch the first target parameter value to the second parameter value in response to a first reflection coefficient being greater than a second reflection coefficient, wherein the first reflection coefficient is a signal reflection coefficient corresponding to the antenna structure operating at the first target parameter value, and the second reflection coefficient is a signal reflection coefficient corresponding to the antenna structure operating at the second parameter value.

4. The communication device according to any one of claims 1 to 3, wherein the communication device further comprises a sensor group, and the sensor group comprises at least one device status sensor; and the device status information further comprises at least one of the following information collected by the at least one device status sensor: information about a relative location between the communication device and a user, motion information of the communication device, and posture information of the communication device.

5. The communication device according to any one of claims 1 to 4, wherein the device status information further comprises at least one of the following information: frequency information of the radio frequency signal and signal quality information of the radio frequency signal.

6. The communication device according to any one of claims 1 to 5, wherein the second parameter value has a plurality of preset fixed values, and the plurality of fixed values one-to-one correspond to a plurality of frequency ranges of the radio frequency signal.

7. The communication device according to any one of claims 1 to 6, wherein operating time of the antenna structure at the first parameter value is greater than or equal to operating time of the antenna structure at the second parameter value.

8. The communication device according to any one of claims 1 to 7, wherein
the antenna structure comprises an impedance matching circuit, and the impedance matching circuit comprises a plurality of impedance tuning branches; and/or
the antenna structure comprises an aperture tuning circuit, and the aperture tuning circuit comprises a plurality of aperture tuning branches, wherein
the first parameter control signal comprises a plurality of code bits, the plurality of code bits one-to-one correspond to the plurality of impedance tuning branches and/or the plurality of aperture tuning branches, and a value of each code bit of the first parameter control signal is used to adjust an operating status of the impedance matching circuit and/or an operating status of the aperture tuning circuit.

9. The communication device according to any one of claims 1 to 8, wherein the communication device further comprises a modem, the modem is connected to the radio frequency integrated circuit, and the control circuit is disposed in the radio frequency integrated circuit, or is disposed in the modem.

10. The communication device according to any one of claims 1 to 8, wherein the control circuit is an artificial intelligence operation circuit.

11. A communication method, applied to a communication device, wherein the communication device comprises a radio frequency integrated circuit and an antenna structure, and the radio frequency integrated circuit is configured to: transmit and/or receive a radio frequency signal based on the antenna structure; and the method comprises:
switching a hardware operating parameter of the antenna structure from a current first parameter value to a second parameter value; and outputting a first parameter control signal based on device status information of the communication device at the first parameter value and device status information of the communication device at the second parameter value, wherein the first parameter control signal is used to set the hardware operating parameter of the antenna structure to a first target parameter value; and the hardware operating parameter comprises an impedance magnitude of the antenna structure and/or an aperture value of the antenna structure.

12. The communication method according to claim 11, wherein the method further comprises:
switching the hardware operating parameter of the antenna structure from the current first target parameter value to the second parameter value, and outputting a second parameter control signal based on device status information of the communication device at the first target parameter value and the device status information of the communication device at the second parameter value, wherein the second parameter control signal is used to set the hardware operating parameter of the antenna structure to a second target parameter value.

13. The communication method according to claim 11, wherein outputting the first parameter control signal based on the device status information of the communication device at the first parameter value and the device status information of the communication device at the second parameter value comprises:
before switching the hardware operating parameter of the antenna structure from the current first parameter value to the second parameter value, obtaining first device status information of the communication device at the first parameter value;
after switching the hardware operating parameter of the antenna structure from the current first parameter value to the second parameter value, obtaining second device status information of the communication device at the second parameter value; and
outputting the first parameter control signal based on the first device status information and the second device status information.

14. The communication method according to claim 11, wherein after outputting the first parameter control signal, the method further comprises:
switching the first target parameter value to the second parameter value in response to a first reflection coefficient being greater than a second reflection coefficient, wherein the first reflection coefficient is a signal reflection coefficient corresponding to the antenna structure operating at the first target parameter value, and the second reflection coefficient is a signal reflection coefficient corresponding to the antenna structure operating at the second parameter value.

15. The communication method according to any one of claims 11 to 14, wherein the communication device further comprises a sensor group, and the sensor group comprises at least one device status sensor; and the device status information further comprises at least one of the following information collected by the at least one device status sensor: information about a relative location between the communication device and a user, motion information of the communication device, and posture information of the communication device.

16. The communication method according to any one of claims 11 to 15, wherein the device status information further comprises at least one of the following information: frequency information of the radio frequency signal and signal quality information of the radio frequency signal.

17. The communication method according to any one of claims 11 to 16, wherein the second parameter value has a plurality of preset fixed values, and the plurality of fixed values one-to-one correspond to a plurality of frequency ranges of the radio frequency signal.

18. The communication method according to any one of claims 11 to 17, wherein operating time of the antenna structure at the first parameter value is greater than or equal to operating time of the antenna structure at the second parameter value.

19. The communication method according to any one of claims 11 to 18, wherein
the antenna structure comprises an impedance matching circuit, and the impedance matching circuit comprises a plurality of impedance tuning branches; and/or
the antenna structure comprises an aperture tuning circuit, and the aperture tuning circuit comprises a plurality of aperture tuning branches, wherein
the first parameter control signal comprises a plurality of code bits, the plurality of code bits one-to-one correspond to the plurality of impedance tuning branches and/or the plurality of aperture tuning branches, and a value of each code bit of the first parameter control signal is used to adjust an operating status of the impedance matching circuit and/or an operating status of the aperture tuning circuit.

20. A computer-readable storage medium, wherein the computer-readable storage medium comprises instructions, and when the instructions are run on a processor, the processor is enabled to perform the communication method according to any one of claims 11 to 19.
